# EUROPÄISCHE PATENTSCHRIFT

(11) **EP 1 682 390 B1**
(45) Veröffentlichungstag und Bekanntmachung des Hinweises auf die Patenterteilung: **06.10.2010**
(21) Anmeldenummer: 04797410.0
(22) Anmeldetag: 04.11.2004
(51) Int. Cl.: B60S 1/04

(54) **WISCHERLAGER**
WIPER BEARING
PALIER D'ESSUIE-GLACE

(30) Priorität: 06.11.2003 DE 10351895; 05.02.2004 DE 102004005731
(43) Veröffentlichungstag der Anmeldung: 26.07.2006
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2004/002460
(87) Internationale Veröffentlichungsnummer: WO 2005/044648

(56) Entgegenhaltungen:
- DE-A1- 10 250 843
- DE-A1- 19 904 155
- US-A- 5 372 449
- US-B1- 6 196 754

## Beschreibung

### Stand der Technik

Die Erfindung geht aus von einem Wischerlager nach dem Oberbegriff des Anspruchs 1.

Ein Wischerlagergehäuse dient zur Lagerung einer Wischerwelle, der Positionierung einer Wischerachse sowie den Befestigungsaufnahmen für die Montage in einem Fahrzeug. Insbesondere bei Schneelast oder bei Blockierfällen treten vor allem im Übergangsbereich zwischen Wischerlagergehäuse und Platinenrohr hohe Kräfte und Momente auf.

Aus der DE 199 25 292 A1 ist eine Wischeranlage bekannt, bei der das Platinenrohr im Übergangsbereich einen vergrößerten Querschnitt aufweist, der die spezifische Belastung in dem kritischen Übergangsbereich reduziert und die Biege- und Torsionssteifigkeit erhöht.

Die US 6,196,754 B1 betrifft eine Antriebsvorrichtung für eine Wischanlage für Scheiben an Kraftfahrzeugen, mit einem ortsfest angeordneten Halteelement, das wenigstens einseitig ein Lager zur Aufnahme einer Wischerwelle aufweist, wobei das Lager als Kunststoffteil ausgebildet ist und mit dem Halteelement durch eine partielle plastische Verformung des Halteelements form- und kraftschlüssig verbunden ist. Dabei soll das Lager einen Stutzen aufweisen, der von einer Buchse umgriffen wird, wobei das Halteelement in einen zwischen dem Stutzen und der Buchse ausgebildeten Ringraum eingreift, das Halteelement innerhalb des Ringraumes partiell plastisch verformbar ist und ein Formschluss zwischen dem Halteelement und dem Stutzen und ein Kraftschluss zwischen dem Halteelement und dem Stutzen sowie dem Halteelement und der Buchse besteht und das Halteelement und die Buchse mit anderen Bereichen des Lagers einstückig ausgebildet sind.

### Vorteile der Erfindung

Es wird vorgeschlagen, dass bei einem erfindungsgemäßen Wischerlager außerhalb eines zur Aufnahme eines Platinenrohrs vorgesehenen Zapfens ein zum Zapfen koaxial angeordnetes Ringelement vorgesehen ist. Der Zapfen ist fest mit einem ein Lagergehäuse bildenden Außenrohr des Wischerlagers verbunden oder mit einem konzentrisch dazu angeordneten Innenrohr. Durch eine formschlüssige Verbindung des Platinenrohrs mit dem Zapfen werden Kräfte von dem Lagergehäuse zum Zapfen sowie Torsionskräfte übertragen. Der Zapfen übernimmt nunmehr hauptsächlich Zugkräfte, Druckkräfte und Torsionskräfte. Das Ringelement und dessen Verbindungsstreben übernehmen Biegemomente und Biegekräfte. Der Zapfen wird mechanisch weniger und insgesamt gleichmäßiger belastet. Das Ringelement kann im Wesentlichen Biegekräfte aufnehmen, die in einer Ebene wirken, die aus einer Lagerachse und dem Zapfen gebildet wird. Das Platinenrohr wird vom Ringelement abgestützt und der Zapfen entsprechend entlastet. Am Zapfen selbst treten nur geringe Biegebelastungen auf. Es ist auch möglich, zwei koaxial angeordnete Ringelemente vorzusehen. Dabei weist das äußere Ringelement eine sehr große Stabilität auf und erleichtert das Verbinden des Platinenrohrs mit dem Zapfen. Bei einer Anbindung des Zapfens am Innenrohr ist die Bauweise besonders kompakt. Die Krafteinleitung erfolgt dabei sowohl auf dem Innenrohr als auch auf dem Außenrohr.

Aufgrund der geringen Belastung kann eine Übergangsgeometrie zwischen dem Zapfen und dessen Lagerstelle am Lagergehäuse einfach ausgeführt werden bei verkürztem Abstand zwischen einem Verbindungsbereich zwischen Zapfen und Platinenrohr und dem Lagerbereich des Zapfens am Innenrohr oder Außenrohr des Lagergehäuses. Das Wischerlager, insbesondere ein Wischerlager aus Kunststoff, kann kürzer und kompakter ausgeführt werden als bisherige Kunststoffwischerlager, bei denen auf einen langen und harmonischen Übergangsbereich geachtet werden musste, um dort auftretende mechanische Spannungsspitzen zu verringern. Durch die kompakte Bauweise des Wischerlagers kann das Platinenrohr näher an den Lagerbereich der Wischerachse herangeführt werden, womit sich ein steiferes Gesamtsystem ergibt. Durch die gleichmäßige mechanische Belastung des Lagergehäuses kann dieses gleichmäßig dünnwandig ausgeführt werden, was für eine Ausführung des Wischerlagers aus Kunststoff besonders vorteilhaft ist, um bei dessen Herstellung Lunker im Kunststoff zu vermeiden. Weiterhin wird eine kürzere Abkühl- und Taktzeit bei der Herstellung ermöglicht. Verbunden mit dem verringerten Eigengewicht ist das Wischerlager mit Ringelement kostengünstig herstellbar und zu montieren. Das Platinenrohr kann mit kleinem Querschnitt ausgeführt werden, was eine Gewichtsverringerung und einen geringeren Bauraumbedarf bedeutet. Wischerträger mit einem kleineren Querschnitt des Platinenrohrs entlasten durch elastische Verformung, beispielsweise bei einem Blockierfall, alle Bauteile des Wischsystems - auch den Wischhebel - wodurch weitere Kosteneinsparungen möglich werden, da diese Bauteile einfacher ausgeführt werden können.

Beim Betrieb der Wischanlage tritt durch die Anordnung des Ringelements und die verbesserte Abstützung des Platinenrohrs im Lagerbereich weniger Bewegung auf, und auch bei hohen Belastungen versagt die Verbindungsstelle nicht. Die Ausrichtung der Wischerwelle bleibt praktisch unverändert, so dass der nach der Auslegung festgelegte Anstellwinkel des Wischblattes zur Fahrzeugscheibe beibehalten und somit eine gute Wischqualität gewährleistet wird.

Trotz der bevorzugten Verwendung von unverstärkten Kunststoffen für das Wischerlager wird durch die besondere Geometrie eine hohe Bauteilsteifigkeit sowie eine Verbesserung der Steifigkeit des Gesamtsystems erreicht. Somit kann der Einsatzbereich von Wischerantrieben mit Kunststoff-Wischerlagern erweitert werden.

Das Lagergehäuse ist beigesteif und kann dennoch aus unverstärktem, kostengünstigen Werkstoffen hergestellt werden. Bei der Herstellung kann mit sehr einfachen Schiebern gearbeitet werden. Aufgrund der Gestaltung des Wischerlagers und dem daraus resultierenden Werkzeugaufbaus eignen sich als Werkstoff neben unverstärkten Kunststoffen grundsätzlich auch Werkstoffe, die nicht so einfach entformbar sind, wie beispielsweise verstärkte Kunststoffe oder metallische Druckgusswerkstoffe, insbesondere Zn, Mg, Al.

Das Ringelement ist verbindungslos zu dem Zapfen am Lagergehäuse angeordnet und kann daher die Biegebelastung weitgehend vom Zapfen fernhalten. Weiterhin ist das Ringelement mit Streben an dem Lagergehäuse befestigt, durch die der Zapfen wenigstens in einem Verbindungsbereich, in dem das Platinenrohr mit dem Zapfen verbunden wird, von außen zugänglich ist. Zum einen ermöglicht die bevorzugte Befestigung mit oberen und unteren Streben eine hohe Steifigkeit der Ringelement-Streben-Anordnung, zum anderen wird sowohl die Herstellung des Wischerlagers als auch die Verbindung des Platinenrohrs mit dem Zapfen vereinfacht, da der Zapfen für entsprechende Werkzeuge, beispielsweise Crimpwerkzeuge, einfach von außen zugänglich ist.

Ist das Ringelement axial vor dem Zapfen angeordnet, insbesondere ohne Überdeckung mit dem Zapfen an dessen Stirnseite, kann das Wischerlager mit einem vorteilhaften Werkzeug ohne Ringkern und einem entsprechend einfachen und soliden Werkzeugschieber hergestellt werden. Dies ermöglicht auch eine bessere Werkzeugkühlung und Kernkühlung bei einem bevorzugten Druckguss- oder Spritzguss-Verfahren. Ragt der Zapfen in einer alternativen Ausgestaltung mit einer Stirnseite in das Ringelement, kann eine Entformung von Hohlprofilkernen und des Ringkerns in derselben Richtung erfolgen, wozu nur ein einziger Werkzeugschieber notwendig ist.

Ist der Zapfen bezüglich einer axialen Erstreckung des Lagergehäuses in etwa mittig angeordnet, ist das Ringelement breit am Lagergehäuse abgestützt, und es tritt nur ein geringer Bauteilverzug des Bauteils beim Abkühlen nach der Herstellung auf, was eine hohe Geometriegüte und eine gute Prozessfähigkeit mit sich bringt. Alternativ kann der Zapfen bezüglich einer axialen Erstreckung des Lagergehäuses außermittig, z.B. an einem unteren Ende des Lagergehäuses, angeordnet sein. Dadurch ist eine breite Abstützung am Lagergehäuse möglich.

Besonders steif kann das Wischerlager ausgeführt werden, wenn der Zapfen einen als Hohlprofil ausgebildeten Querschnitt aufweist. Diese Ausgestaltung ist besonders steif. Die für diese Hohlprofile notwendigen Werkzeugkerne können so ausgerichtet werden, dass sie in Richtung des Zapfens gezogen werden können, also gleichzeitig mit einem ringförmigen Werkzeugkern für die Erzeugung des Ringelements. Alternativ weist der Zapfen einen als T-Träger oder Doppel-T-Träger ausgebildeten Querschnitt auf. Eine Verbindungsgeometrie kann in zwei Werkzeughälften erzeugt bzw. entformt werden. Der Werkzeugaufbau ist besonders einfach.

Vorteilhaft ist, dass eine Bauteilgeometrie zwischen dem Ringelement und der Lagerstelle bei seiner Herstellung seitlich entformbar ist. Dies ermöglicht, neben den bereits geschilderten Vereinfachungen der Werkzeuge, dass nach dem Aufschieben des Platinenrohrs dieses umschlossen werden kann, um das Platinenrohr mit einem bevorzugten so genannten Vercrimpen mit dem Zapfen zu verbinden. Ein guter Formschluss und eine qualitativ hohe Güte der Verbindung zwischen Platinenrohr und Zapfen ist damit gewährleistet. Dabei wird das Platinenrohr plastisch verformt und in dafür vorgesehene Taschen des Wischerlagergehäuses bzw. des Zapfens verdrängt. Übliche Werkzeuge zum Vercrimpen können verwendet werden.

### Zeichnungen

Die Erfindung wird nachfolgend in einem Ausführungsbeispiel anhand der zugehörigen Zeichnungen näher erläutert. Es zeigen:
Es zeigen:
   - Fig. 1: ein Wischerlager mit einem kurzen Ringelement mit a- symmetrischer Anbindung über Trägerprofile;
   - Fig. 2: ein Wischerlager mit einem kurzen Ringelement mit sym- metrischer Anbindung mit Hohlprofilquerschnitt;
   - Fig. 3 a, b: eine Darstellung von Schnittebenen in Längsrichtung (a) und senkrecht zu einer Zapfensymmetrielinie (b);
   - Fig. 4 a, b: einen Werkzeugaufbau und die Trennung von Werk- zeughälften bei einem Querschnitt mit Hohlprofil (a) und einem Querschnitt mit T-Träger-Profil (b);
   - Fig. 5 a, b: einen Werkzeugaufbau (a) und einen Werkzeugkern mit Ringkern (b);
   - Fig. 6: einen Querschnitt durch ein Wischerlager mit Überde- ckung von Zapfen und Ringelement;
   - Fig. 7a, b: einen Werkzeugaufbau (a) und einen Werkzeugkern oh- ne Ringkern (b);
   - Fig. 8: einen Querschnitt durch ein Wischerlager ohne Überde- ckung von Zapfen und Ringelement;;
   - Fig. 9 a-f: anhand eines Querschnitts durch den Zapfen einen Ver- fahrensablauf eines Crimpprozesses vor (a) und nach Aufstecken eines Platinenrohrs (b), Heranführen des Werkzeugs (c), Umschließen des Platinenrohrs mit dem Werkzeug (d), Einfahren der Stempel in den Verbin- dungsbereich zwischen Platinenrohr und Zapfen (e) und die fertige Verbindung (f);
   - Fig. 10 a, b: einen Größenvergleich eines bevorzugten Wischerlagers (a) mit einem bekannten Wischerlagers (b);
   - Fig. 11: einen Schnitt durch ein Wischerlager mit als doppeltem Ring ausgeführten Ringelement;
   - Fig. 12: eine Darstellung eines Zusammenbaus von Wischerlager und Platinenrohr; und
   - Fig. 13: einen Vergleich von Bauteilsteifigkeiten eines bevorzug- ten Wischerlagers gemäß der Erfindung und zweier be- kannter Wischerlager mit Hohlprofil-Zapfen und T- Träger-Zapfen.

### Beschreibung der Ausführungsbeispiele

Die Erfindung ist besonders für Wischerlager aus Kunststoff geeignet. In den Figuren werden generell für gleiche Teile gleiche Bezugszeichen verwendet.

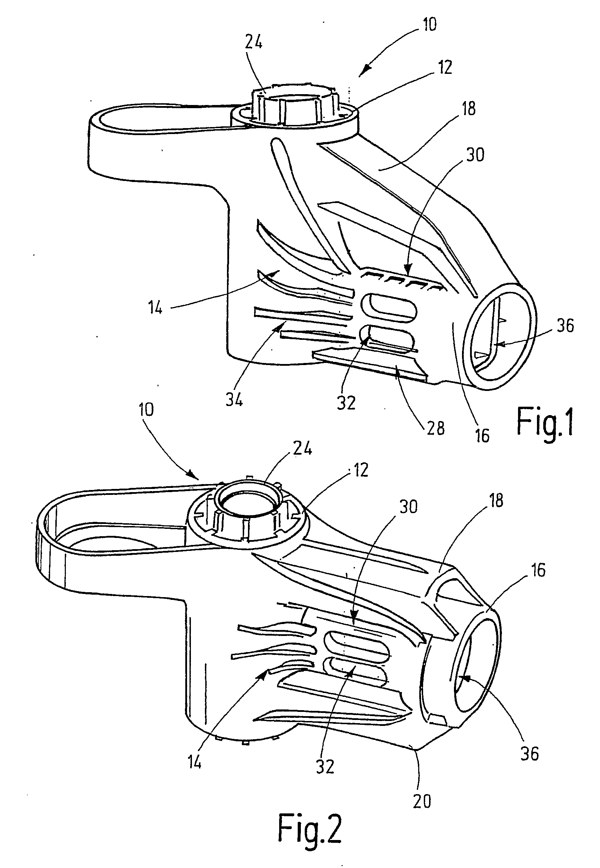

Fig. 1 zeigt ein Wischerlager 10 für eine Scheibenwischanlage mit einem Lagergehäuse 12 und einem an einem Lagerbereich 14 am Lagergehäuse 12 angeordneten Zapfen 30 und einem kurzen Ringelement 16. Das von einem Außenrohr gebildete Lagergehäuse 12 umgibt konzentrisch ein Innenrohr 24. Das kurze Ringelement 16 ist außerhalb des Zapfens 30 im Bereich seiner Stirnfläche 36 koaxial angeordnet. Zapfen 30 und Ringelement 16 sind bezüglich einer axialen Erstreckung des Lagergehäuses 12 außermittig angeordnet.

Das Ringelement 16 ist mit oberen Streben 18 und unteren Streben 20 an dem Lagergehäuse 12 befestigt, durch die der Zapfen 30 wenigstens in einem Verbindungsbereich 32 von außen zugänglich ist. In diesem Verbindungsbereich 32 wird später ein nicht dargestelltes Platinenrohr mit dem Zapfen 30 verbunden. Die Streben 18, 20 sind hier als T-Träger ausgebildet. Das Ringelement 16 hat keine direkte Verbindung zu dem Zapfen 30, so dass das nicht dargestelltes Platinenrohr in einen geringen Freiraum zwischen Zapfen 30 und Innenumfang des Ringelements 16 auf den Zapfen 30 aufgesteckt werden kann. Der Freiraum ist so bemessen, dass das Platinenrohr sowohl an dem Zapfen 30 als auch an dem Innenumfang des Ringelements 16 anliegen kann.

Fig. 2 zeigt ein Wischerlager 10 mit einem kurzen Ringelement 16 mit symmetrischer Anbindung von Zapfen 30 und Ringelement 16 am Lagergehäuse 12. Untere und obere Streben 18, 20, welche das Ringelement 16 haken, weisen einen Hohlprofilquerschnitt auf. Zapfen 30 und Ringelement 16 sind bezüglich einer axialen Erstreckung des Lagergehäuses 12 in etwa mittig angeordnet.

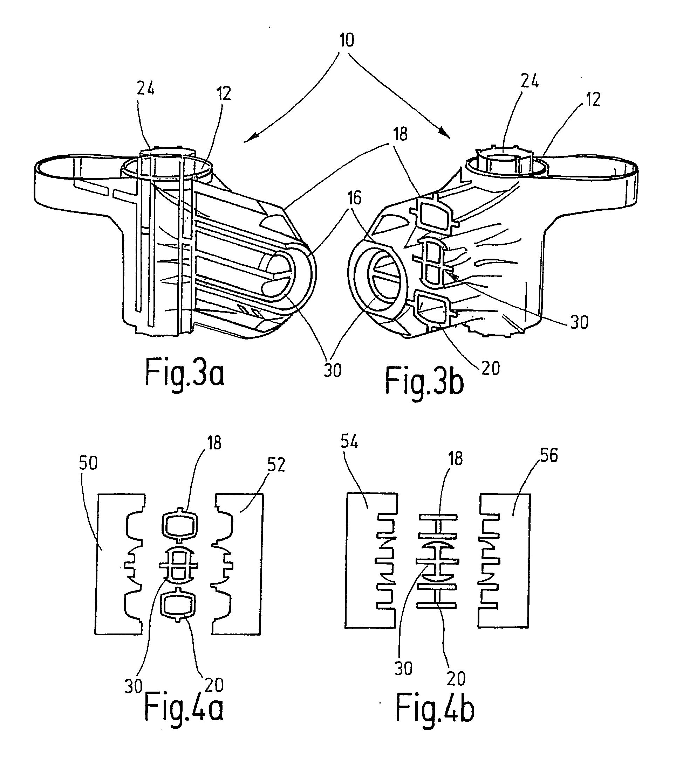

Eine Darstellung von Schnittebenen durch das Wischerlager 10 ist in Fig. 3 a, b dargestellt. Fig. 3 a zeigt einen Schnitt in Längsrichtung des Zapfens 30. Erkennbar ist, dass der Zapfen 30 verbindungslos zum Ringelement 16 ist. Fig. 3 b zeigt einen Schnitt senkrecht zu einer Zapfensymmetrielinie. Der Zapfen 30 weist ein Hohlprofil auf, welches ein mittig angeordnetes Verstärkungselement aufweist, die unteren und oberen Streben 18, 20, die das Ringelement 16 halten, sind ebenso als Hohlprofile ausgebildet.

Fig. 4 a, b zeigt eine Querschnitt auf ein bevorzugtes Werkzeug zur Herstellung von Streben 18, 20 und Zapfen 30 sowie die Trennung von Werkzeughälften 50, 52 des Werkzeugs. Die erfindungsgemäße Anordnung der Streben 18, 20 und des Zapfens 30 erlaubt vorteilhaft die Verwendung eines Werkzeugs, das in der Mitte in die zwei Werkzeughälften 50, 52 teilbar ist. Fig. 4 a zeigt das Werkzeug mit als Hohlprofile ausgebildeten Streben 18, 20 und einem als Hohlprofil ausgebildeten Zapfen 30. Fig. 4 b zeigt als Variante das Werkzeug für als T-Träger-Profil ausgebildete Streben 18, 20 und Zapfen 30.

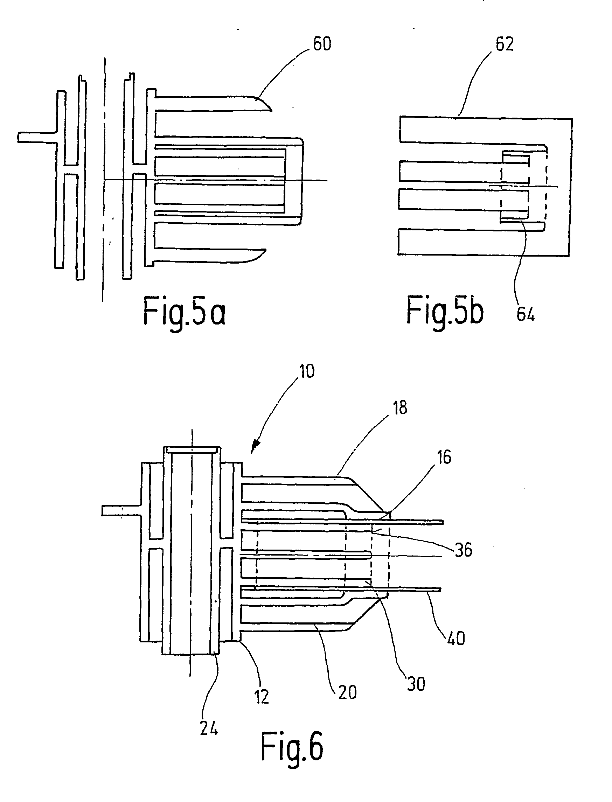

Fig. 5 a, b zeigt einen Längsschnitt durch einen bevorzugten Werkzeugaufbau eines Werkzeugs 60 (Fig. 5 a) und einen zugehörigen bevorzugten Werkzeugschiebers 62 (Fig. 5 b) für eine Ausbildung von Zapfen 30 und Streben 18, 20 mit Hohlprofilen. Zur Entformung der vier Hohlprofilkerne, wie beispielsweise in Fig. 4 a dargestellt, ist vorteilhaft nur ein einziger Werkzeugschieber 62 notwendig, wobei Ringkern 64 und die Hohlprofilkerne in dieselbe Richtung entformt werden können. Der Ringkern 64 ist notwendig, wenn sich Zapfen 30 und Ringelement 16 überdecken, d.h. die Stirnseite 36 des Zapfens 30 in das Ringelement 16 hineinragt. Fig. 6 zeigt einen Schnitt durch ein derartiges Wischerlager 10 mit Überdeckung von Zapfen 30 und Ringelement 16 mit aufgeschobenem Platinenrohr 40. Im Überdeckungsbereich ist das Platinenrohr 40 stabil zwischen Ringelement 16 und Zapfen 30 eingeklemmt.

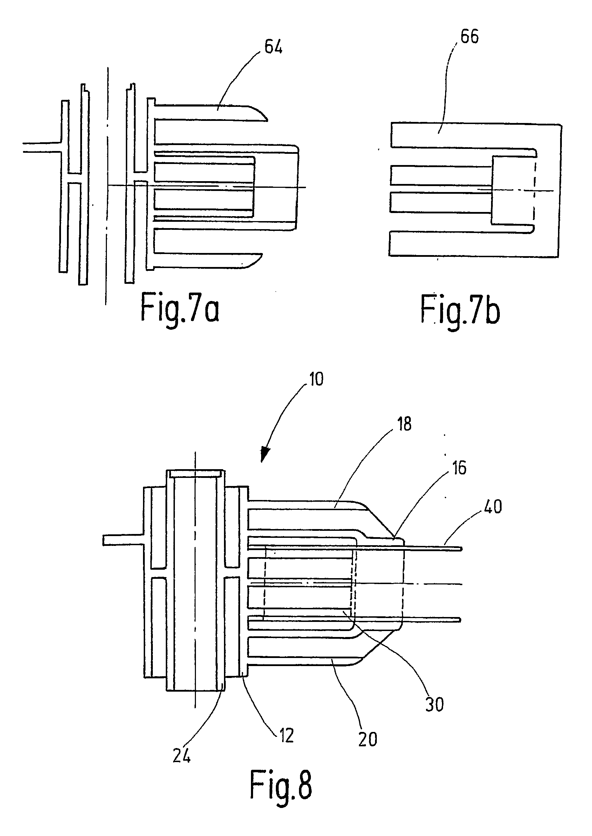

Ein Werkzeugaufbau ohne Ringkern ist in Fig. 7a, b dargestellt. Der Werkzeugaufbau des Werkzeugs 70 zeigt eine Form für einen kürzeren Zapfen 30 als in Fig. 5 a (Fig. 7 a) und einen Werkzeugkern ohne Ringkern (Fig. 7 b). Dadurch ist ein solider Werkzeugschieberaufbau möglich, ferner können das Werkzeug und der Werkzeugkern besser gekühlt werden. Die Variante eines derartigen Wischerlagers 10 ist in Fig. 8 als Querschnitt dargestellt. Ein Platinenrohr 40 ist auf einen Zapfen 30 aufgeschoben und wird gleichzeitig von einem Ringelement 16 umfasst. Der Zapfen 30 ist kürzer als beim Ausführungsbeispiel in Fig. 6 und ragt nicht in das Ringelement 30 hinein, welches axial vor dem Zapfen 30 sitzt.

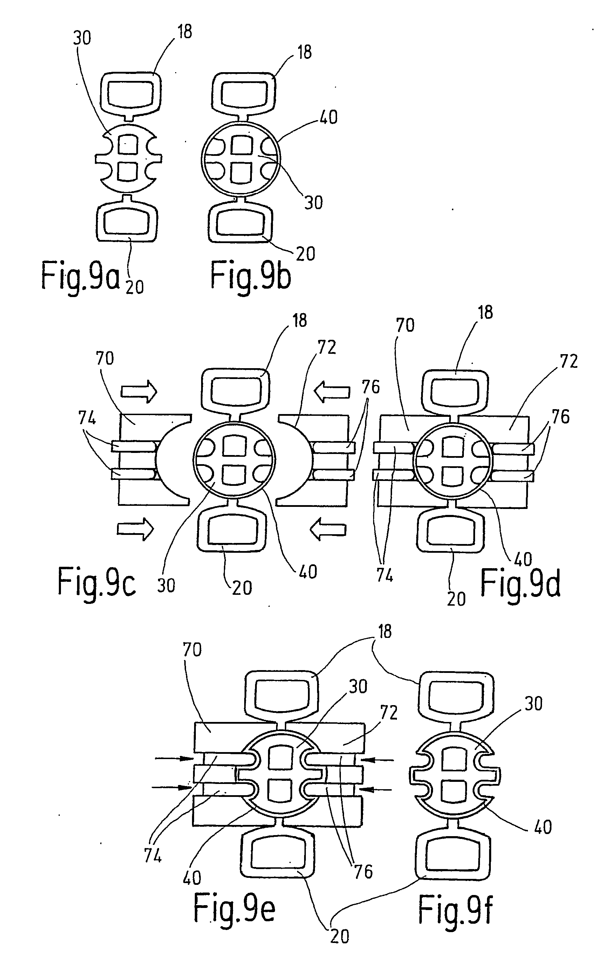

Fig. 9 a-f illustriert anhand von Querschnitten durch Zapfen 30 und Streben 18, 20 einen Verfahrensablauf eines als Crimpprozess ausgeführten Verbindungsprozesses zwischen Zapfen 30 und Platinenrohr 40. Zapfen 30 und Streben 18, 20 zu Beginn des Verbindens zeigt Fig. 9 a. Fig. 9 b zeigt zusätzlich das auf den Zapfen 30 aufgeschobene Platinenrohr 40. Anschließend wird beidseits des Zapfens 30 jeweils ein Werkzeugteil 70, 72 mit Stempelpaaren 74, 76 an den Zapfen 30 herangeführt (Fig. 9 c), bis der von dem Platinenrohr 40 umschlossene Zapfen 30 von dem Werkzeugteilen 70, 72 umschlossen ist (Fig. 9 d). Dies ist durch die besondere Wischerlagergeometrie möglich und sehr vorteilhaft für die Qualität der Verbindung zwischen Zapfen 30 und Platinenrohr 40. Anschließend werden die Stempelpaare 74, 76 zum Erzeugen eines Formschlusses zwischen Wischerlager bzw. Zapfen 30 und Platinenrohr 40 in das Platinenrohr 40 hineingedrückt. Die Stempelpaare 74, 76 verdrängen das Rohrmaterial in dafür vorgesehene Taschen am Zapfen 30 (Fig. 9 e). Fig. 9 f zeigt die fertige Anordnung nach Abschluss des Verbindungsprozesses. Das Platinenrohr 40 ist im Verbindungsbereich (entsprechend Verbindungsbereich 32 in Fig. 1 und Fig. 2) formschlüssig mit dem Zapfen 30 verbunden.

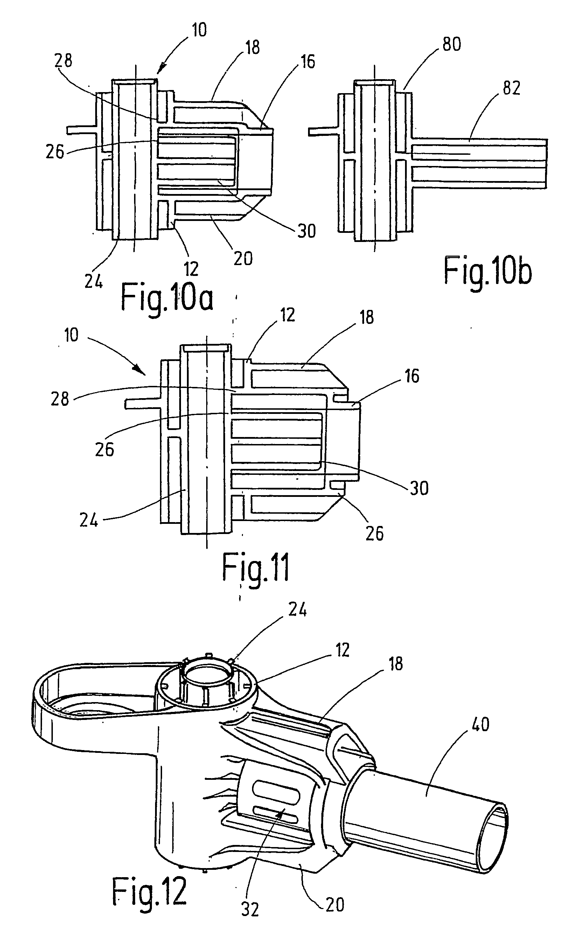

Fig. 10 a, b zeigt einen Größenvergleich eines bevorzugten Wischerlagers 10 (Fig. 10 a) mit einem bekannten Wischerlager 80 (Fig. 10 b). Das bevorzugte Wischerlager 10 weist einen Zapfen 30 auf, der an einem Innenrohr 24 des Wischerlagers 10 angebunden ist, so dass eine Krafteinleitung sowohl auf das Innenrohr 24 als auch auf das als Außenrohr ausgebildete Lagergehäuse 12 erfolgt. Der Lagerbereich 26 des Zapfens 30 und der Lagerbereich 28 des Ringelements 16 bzw. der das Ringelement 16 haltenden Elemente auf dem Innenrohr 24 ist vorzugsweise konzentrisch ausgebildet, um eine gute Rundheit der beiden Lagerbereiche 26, 28 zu gewährleisten. Dagegen zeigt das bekannte Wischerlager 80 einen Zapfen 82, der erheblich länger sein muss als bei der erfindungsgemäßen Anordnung mit entsprechender geringer Biegesteifigkeit und Spannungsüberhöhungen bei Belastung.

Fig. 11 zeigt einen Schnitt durch ein Wischerlager 10, bei dem das Ringelement 16 als Doppelring ausgebildet ist. Der Doppelring erhöht die Stabilität des Ringelements 16. Weiterhin ist dadurch zwischen dem Zapfen 30 und den Streben 18, 20 ein größerer Freiraum geschaffen, so dass beim Verbinden des Platinenrohrs 40 mit dem Zapfen 30 mehr Platz für ein Werkzeug, insbesondere ein Crimpwerkzeug, ist.

Fig. 12 zeigt eine Darstellung eines Zusammenbaus von Wischerlager 10 und Platinenrohr 40. Das Platinenrohr 40 ist im Verbindungsbereich 32 formschlüssig mit dem Zapfen 30 verbunden. Streben 18, 20 halten ein Ringelement 16, welches das Platinenrohr 40 umfasst. Die Streben 18, 20 sind als Hohlprofile ausgebildet.

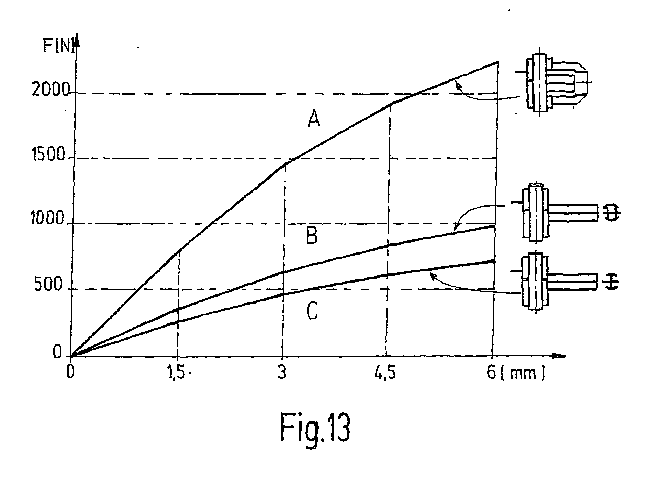

Die erfindungsgemäße Ausgestaltung eines Wischerlagers 10 bringt eine deutliche Verbesserung der Bauteilsteifigkeit mit sich. Fig. 13 zeigt einen Vergleich von Bauteilsteifigkeiten eines bevorzugten Wischerlagers 10 und zweier bekannter Wischerlager mit Hohlprofil-Zapfen und T-Träger-Zapfen ähnlich der Ausführung in Fig. 10 b.

Die geringste Bauteilsteifigkeit weist das bekannte Wischerlager mit dem T-Träger-Zapfen auf, was in Kurve C deutlich erkennbar ist. Ein bekanntes Wischerlager mit einem Hohlprofil-Zapfen zeigt zwar eine Verbesserung der Bauteilsteifigkeit (Kurve B), ist das erfindungsgemäße Wischerlager 10 in seiner Bauteilsteifigkeit um mehr als einen Faktor 2 verbessert. Dies rührt unter anderem daher, dass die Verteilung der elastischen Spannung hier sehr gleichmäßig am Zapfen verteilt ist, während bei den bekannten Wischerlagern lokale Spannungsüberhöhungen auftreten, wie Analysen mittels der Finite-Element-Methode (FEM) ergeben.

### Bezugszeichen

- 10: Wischerlager
- 12: Lagergehäuse
- 14: Lagerbereich
- 16: Ringelement
- 18: Strebe
- 20: Strebe
- 24: Innenring
- 26: Lagerbereich
- 28: Lagerbereich
- 30: Zapfen
- 32: Verbindungsbereich
- 34: Strebe
- 36: Stirnseite
- 40: Platinenrohr
- 50: Werkzeugteil
- 52: Werkzeugteil
- 54: Werkzeugteil
- 56: Werkzeugteil
- 60: Werkzeug
- 62: Werkzeugkern
- 64: Werkzeug
- 66: Werkzeugkern
- 70: Werkzeugteil
- 72: Werkzeugteil
- 74: Stempelpaar
- 76: Stempelpaar

## Patentansprüche

1. Wischerlager für eine Scheibenwischanlage mit einem Lagergehäuse (12) mit einem das Lagergehäuse (12) bildenden Außenrohr und einem konzentrisch dazu angeordneten Innenrohr (24) und einem an einem Lagerbereich (14) am Lagergehäuse (12) angeordneten Zapfen (30) zur Aufnahme eines Platinenrohrs (40), wobei außerhalb des Zapfens (30) im Bereich seiner Stirnseite (36) ein zum Zapfen (30) koaxial und verbindungslos am Lagergehäuse (12) angeordnetes Ringelement vorgesehen ist, **dadurch gekennzeichnet, dass** das Ringelement (16) axial vor dem Zapfen (30) angeordnet und mit Verbindungsstreben (18,20) an dem Lagergehäuse (12) befestigt ist, durch die der Zapfen (30) wenigstens in einem Verbindungsbereich (32) von außen zugänglich ist.

2. Wischerlager nach Anspruch 1, **dadurch gekennzeichnet, dass** der Zapfen (30) mit der Stirnseite (36) in das Ringelement (16) ragt.

3. Wischerlager nach einem der vorhergehenden Ansprüche, **dadurch gekennzeichnet, dass** der Zapfen (30) bezüglich einer axialen Erstreckung des Lagergehäuses (12) in etwa mittig angeordnet ist.

4. Wischerlager nach einem der Ansprüche 1 und 2, **dadurch gekennzeichnet, dass** der Zapfen (30) bezüglich einer axialen Erstreckung des Lagergehäuses (12) außermittig angeordnet ist.

5. Wischerlager nach einem der vorhergehenden Ansprüche, **dadurch gekennzeichnet, dass** der Zapfen (30) am Innenrohr (24) angebunden ist.

6. Wischerlager nach einem der vorhergehenden Ansprüche, **dadurch gekennzeichnet, dass** der Zapfen (30) einen als Hohlprofil ausgebildeten Querschnitt aufweist.

7. Wischerlager nach einem der Ansprüche 1 bis 4, **dadurch gekennzeichnet, dass** der Zapfen (30) einen als Doppel-T-Träger ausgebildeten Querschnitt aufweist.

8. Wischerlager nach einem der vorhergehenden Ansprüche, **dadurch gekennzeichnet, dass** eine Bauteilgeometrie zwischen dem Ringelement (16) und dem Lagerbereich (14) bei seiner Herstellung seitlich entformbar ist.

## Claims

1. Wiper bearing for a window wiper system, having a bearing housing (12) with an outer tube forming the bearing housing (12) and an inner tube (24) arranged concentrically with respect thereto, and with a journal (30) which is arranged on a bearing region (14) of the bearing housing (12) and is intended for receiving a tubular plate (40), wherein an annular element is provided outside the journal (30) in the region of the end side (36) thereof, said annular element being arranged on the bearing housing (12) coaxially with respect to the journal (30) and without any connection, **characterized in that** the annular element (16) is arranged axially in front of the journal (30) and is fastened to the bearing housing (12) by connecting struts (18, 20) by means of which the journal (30) is accessible from the outside at least in a connecting region (32).

2. Wiper bearing according to Claim 1, **characterized in that** the end side (36) of the journal (30) protrudes into the annular element (16).

3. Wiper bearing according to one of the preceding claims, **characterized in that** the journal (30) is arranged approximately centrally with respect to an axial extent of the bearing housing (12).

4. Wiper bearing according to either of Clams 1 or 2, **characterized in that** the journal (30) is arranged eccentrically with respect to an axial extent of the bearing housing (12).

5. Wiper bearing according to one of the preceding claims, **characterized in that** the journal (30) is joined to the inner tube (24).

6. Wiper bearing according to one of the preceding claims, **characterized in that** the journal (30) has a cross section in the form of a hollow profile.

7. Wiper bearing according to one of Claims 1 to 4, **characterized in that** the journal (30) has a cross section in the form of an I support.

8. Wiper bearing according to one of the preceding claims, **characterized in that** a component geometry between the annular element (16) and the bearing region (14) can be removed laterally from the mould during the production thereof.

## Revendications

1. Palier d'essuie-glace pour une installation d'essuie-glace comprenant un boîtier de palier (12) avec un tube extérieur formant le boîtier de palier (12) et un tube intérieur (24) disposé de manière concentrique à celui-ci et un tourillon (30) disposé au niveau d'une région de palier (14) sur le boîtier de palier (12), pour recevoir un tube de platine (40), un élément annulaire disposé coaxialement au tourillon (30) et sans connexion sur le boîtier de palier (12) étant prévu en dehors du tourillon (30) dans la région de son côté frontal (36), **caractérisé en ce que** l'élément annulaire (16) est disposé axialement avant le tourillon (30) et est fixé avec des entretoises de connexion (18, 20) au boîtier de palier (12), les entretoises de connexion permettant d'accéder au tourillon (30) depuis l'extérieur au moins dans une région de connexion (32).

2. Palier d'essuie-glace selon la revendication 1, **caractérisé en ce que** le tourillon (30) pénètre avec le côté frontal (36) dans l'élément annulaire (16) .

3. Palier d'essuie-glace selon l'une quelconque des revendications précédentes, **caractérisé en ce que** le tourillon (30) est disposé approximativement centralement par rapport à une étendue axiale du boîtier de palier (12).

4. Palier d'essuie-glace selon l'une quelconque des revendications 1 et 2, **caractérisé en ce que** le tourillon (30) est disposé de manière décentrée par rapport à une étendue axiale du boîtier de palier (12).

5. Palier d'essuie-glace selon l'une quelconque des revendications précédentes, **caractérisé en ce que** le tourillon (30) est relié au tube intérieur (24).

6. Palier d'essuie-glace selon l'une quelconque des revendications précédentes, **caractérisé en ce que** le tourillon (30) présente une section transversale réalisée sous forme de profilé creux.

7. Palier d'essuie-glace selon l'une quelconque des revendications 1 à 4, **caractérisé en ce que** le tourillon (30) présente une section transversale réalisée sous forme de support en double T.

8. Palier d'essuie-glace selon l'une quelconque des revendications précédentes, **caractérisé en ce qu'**une géométrie de composant peut être démoulée latéralement entre l'élément annulaire (16) et la région de palier (14) lors de sa fabrication.
